# EUROPEAN PATENT APPLICATION

(11) **EP 4 645 210 A1**
(43) Date of publication of application: **05.11.2025**
(21) Application number: 24174009.1
(22) Date of filing: 03.05.2024
(51) Int. Cl.: G06T 5/50, G06T 5/60, G06T 5/90

(54) **CONSTRUCTION OF HIGH-DYNAMIC RANGE IMAGES**

(71) Applicant: CellaVision AB, 223 62 Lund (SE)
(72) Inventor: Almers, Martin, 226 51 Lund (SE); Hedlund, Sven, 226 57 Lund (SE); Jönsson, Jesper, 224 80 Lund (SE)
(74) Representative: AWA Sweden AB

(57) **Abstract**

The present inventive concept relates to a method (30) for training a machine learning model to construct a high-dynamic range image depicting a sample. The method (30) comprises: acquiring (S300) a training set of images by: illuminating (S302), using an illumination system (110), the training sample (142) with a plurality of illumination patterns, and capturing (S304) an image of the training sample (142) for each illumination pattern of the plurality of illumination patterns; acquiring (S306) a high-dynamic range image depicting the training sample (142), wherein the high-dynamic range image has a dynamic range higher than a dynamic range of an image of the training set of images; forming (S308) a ground truth comprising the high-dynamic range image; and training (S310) the machine learning model to construct the high-dynamic range image depicting a sample using the training set of images and the ground truth.

## Description

### Technical field

The present inventive concept relates to construction of high-dynamic range image depicting a sample.

### Background of the invention

Microscopy is an important tool in many scientific and industrial applications, enabling observation of objects and phenomena at scales not visible to the naked eye. Microscopy is, for example, common in sample analysis, fabrication and verification of miniscule structures (e.g., electronic circuit boards), etc. However, conventional microscopy techniques can face challenges related to imaging quality and detail.

One problem in microscopy imaging is the limited dynamic range of conventional microscope cameras. This limitation often results in images with areas of glare and dark spots (i.e., oversaturated and undersaturated pixels are present in the images). Furthermore, subtle contrast cannot be rendered, and colors may appear less vivid, making it difficult to differentiate between similar shades. These issues can obscure important details and hinder accurate analysis. High dynamic range (HDR) imaging has emerged as a solution to such problems. HDR imaging techniques increase the dynamic range of measurements, allowing for a wide range of brightness levels that eliminate glare and underexposed areas. This results in images where minute surface features can be seen in sharp contrast, and true color appearance with subtle variations can be reproduced.

However, capturing HDR images using conventional microscopy presents its own set of challenges. The most widely used HDR imaging technique involves forming a single HDR image by combining multiple images acquired with different exposure settings. However, an optimization step is required to calibrate the range of exposures needed to capture the entire luminance range, which can vary widely between different target samples.

Thus, there is a need for improvements within the art.

### Summary of the invention

It is an object of the present inventive concept to, at least partly, mitigate, alleviate or eliminate one or more of the above-identified deficiencies in the art and disadvantages singly or in any combination and solve at least the above-mentioned problem.

The inventors of the present inventive concept have realized a way of using Fourier ptychographic microscopy (FPM) and machine learning to achieve a simple, accurate, and effective method and microscopy system for constructing a high-dynamic range image depicting a sample, without the need for precisely optimizing an exposure of each image used to construct the high-dynamic range image. Hence, a more time effective and/or more stable process for producing high-dynamic range images depicting samples can be achieved.

According to a first aspect, a method for training a machine learning model to construct a high-dynamic range image depicting a sample is provided. The method comprises: acquiring a training set of images by: illuminating, using an illumination system, the training sample with a plurality of illumination patterns, and capturing an image of the training sample for each illumination pattern of the plurality of illumination patterns; acquiring a high-dynamic range image depicting the training sample, wherein the high-dynamic range image has a dynamic range higher than a dynamic range of an image of the training set of images; forming a ground truth comprising the high-dynamic range image; and training the machine learning model to construct the high-dynamic range image depicting a sample using the training set of images and the ground truth.

It should be noted that the training set of images may comprise images of multiple training samples. Thus, the training set of images may comprise one or more sets of images for one or more training samples. Each set of images (of the training set) may have a corresponding ground truth.

The wording "training" as in "training sample" is herein used to refer to a sample used during training, as opposed to a general sample which the machine learning model is trained to construct a high-dynamic range image of. The constructed high-dynamic range image may then be a high-dynamic range image depicting the general sample. The machine learning model may of course be able to construct a high-dynamic range image depicting the training sample. The machine learning model may also be able to construct high-dynamic range images of other samples as well, which may not be part of the training set of images. Put differently, the machine learning model may, after training, be able to construct high-dynamic range images depicting samples not used for training the machine learning model. Simply "the sample" may be used herein to refer to either the samples used during training or the samples input into the trained machine learning model, depending on the context.

Within the context of this disclosure, the wording "high-dynamic range image depicting a sample" should be construed as a computer-generated image depicting a sample at a dynamic range not achievable using a single exposure (e.g., a single exposure time) of the sample. This image may be similar, or even identical, to an image of the sample captured by use of conventional techniques, such as by use of a bright-field microscopy, while images of the sample at different exposures are captured and combined into a high-dynamic range image. Therefore, the constructed high-dynamic range image of the sample may replicate a high-dynamic range image depicting the sample produced by conventional means, but in an improved way as will be set forth in the following disclosure.

Within the context of this disclosure, the wording "ground truth" should be construed as information that is known to be real and/or true. Hence, in this context, since a machine learning model being able to construct a high-dynamic range image depicting a sample is trained using the ground truth and the training set of images, the ground truth may represent a high-dynamic range image of the training sample. Such a high-dynamic range image of the training sample may be captured and produced using conventional techniques.

Within the context of this disclosure, the wording "illumination patterns" may be construed as different ways of illuminating the sample by one or more of the plurality of light sources. The different illumination patterns may, e.g., be formed by illuminating the sample from one or more directions of a plurality of directions, and/or by varying the number of light sources of the plurality of light sources that emit light.

The machine learning model may be trained to correlate the training set of images of the training sample to the ground truth (e.g., the high-dynamic range image depicting the training sample). The machine learning model may be trained iteratively and/or recursively until a difference between an output of the machine learning model (i.e., the constructed high-dynamic range image depicting the training sample) and the ground truth (i.e., the high-dynamic range image depicting the training sample) is smaller than a predetermined threshold. A smaller difference between the output of the machine learning model and the ground truth may indicate a higher accuracy of the constructed high-dynamic range image depicting the sample provided by the machine learning model. Hence, preferably, the difference between the output of the machine learning model and the ground truth may be minimized. The machine learning model may be trained to construct high-dynamic range images of samples for a plurality of different sample types. In such case, the machine learning model may, for each sample type, be trained using a training set of images of a training sample of the sample type, and a corresponding ground truth associated with the respective sample type.

By illuminating the training sample with a plurality of illumination patterns and capturing an image for each illumination pattern of the plurality of illumination patterns, information regarding finer details of the training sample may be captured than what normally is resolvable by a conventional microscope (i.e., using a conventional microscope illumination such as bright-field illumination) used to image the training sample. This can be understood as different portions of Fourier space (i.e., the spatial frequency domain) associated with the training sample being imaged for different illumination patterns. This technique may be known in the art as Fourier Ptychographic Microscopy (FPM). Since information regarding finer details of the training sample may be captured, a microscope objective having a lower magnification may be used while still being able to capture information related to fine details of the training sample. Using a relatively lower magnification microscope objective may, in turn, allow for images of larger portions of the training sample to be captured at each imaging position. Hence, the entire training sample may be scanned by capturing images at relatively fewer positions which, in turn, may allow for a faster scanning of the training sample. Further, by illuminating the training sample with a plurality of illumination patterns and capturing an image for each of the plurality of illumination patterns, information regarding a refractive index (or a spatial distribution of a refractive index) associated with the training sample may be captured. This can be understood as an effect of refraction of light being dependent on an angle of incidence for light illuminating the training sample and the refractive index of the training sample. Information regarding the refractive index of the training sample may, in turn, allow phase information (typically referred to as quantitative phase within the art) associated with the training sample to be determined. Since the training set of images comprises information associated with one or more of fine details of the training sample, a refractive index associated with the training sample, and phase information associated with the training sample, this information may be used in the training of the machine learning model, which may, in turn, allow for a machine learning model being trained to more accurately construct the high-dynamic range image depicting the training sample than what would be allowed in case the training set of images was captured using a single illumination pattern (e.g., conventional bright-field illumination, conventional dark-field illumination, or from a single direction) or by using conventional microscopy. Using conventional microscopy (e.g., by illuminating the sample from directions up to a numerical aperture of the microscope objective used to image the training sample), it may be difficult, or even impossible, to capture information associated with the refractive index associated with the training sample and/or phase information associated with the training sample. Put differently, since an image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy.

Further, the captured information of the training sample may allow for the machine learning model to construct the high-dynamic range image depicting the sample, despite the input images to the machine learning model having a smaller dynamic range compared to the constructed high-dynamic range image. This removes the need for a meticulous and time-consuming process of adjusting an exposure of each image of the training sample to capture images covering a dynamic range corresponding to a high-dynamic range image to be constructed using conventional means.

Acquiring the high-dynamic range image may comprise: setting an image-capture arrangement configured to capture images of the training sample to a plurality of exposure settings; capturing, for each exposure setting of the plurality of exposure settings, an image depicting the training sample, thereby forming a stack of images; and forming the high-dynamic range image by combining the stack of images.

Acquiring the training set of images for at least one illumination pattern may further comprise: setting an image-capture arrangement configured to capture images of the training sample to a plurality of exposure settings; and capturing, for each exposure setting of the plurality of exposure settings, an image of the training sample. Accordingly, the images of the training set may comprise information of a wider dynamic range compared to a training set of images captured using only a single exposure setting, whereby an improved training of the machine learning model to construct a high-dynamic range image may be allowed.

The image-capture arrangement may comprise at least one image sensor. Setting the image-capture arrangement to a plurality of exposure settings may comprise: setting a first set of pixels of the at least one image sensor to a first exposure setting; and setting a second set of pixels of the at least one image sensor to a second exposure setting different from the first exposure setting. The first set of pixels and the second set of pixels may be pixels of one image sensor. Accordingly, a single image sensor may be used to acquire the high-dynamic range image depicting the training sample and/or the training set of images. A less complex system capable of capturing the high-dynamic range image of the training sample may thereby be allowed. The first set of pixels and the second set of pixels may be pixels of different image sensors. Accordingly, less advanced image sensors may thereby be used to capture the high-dynamic range image depicting the training sample and/or the training set of images. Associated economical costs may thereby be reduced.

The image-capture arrangement may comprise a shutter. Setting the image-capture arrangement to a plurality of exposure settings may comprise setting the shutter to a plurality of exposure times.

The training set of images may be acquired using a first microscope objective. The high-dynamic range image of the ground truth may be acquired using a second microscope objective. The second microscope objective may have a higher numerical aperture than the first microscope objective, whereby a resolution of the high-dynamic range image may be higher than a resolution of an image of the training set of images. Accordingly, the machine learning model may be trained to construct a high-dynamic range image having a resolution higher than a resolution of one or more images of the training set. Put differently, the machine learning model may be trained to replicate the training sample in a relatively high-resolution image using a set of relatively low-resolution images.

The illumination system may comprise a plurality of light sources. Each light source of the plurality of light sources may be configured to illuminate the training sample from one direction of a plurality of directions. Each illumination pattern of the plurality of illumination patterns may be formed by one or more light sources of the plurality of light sources. The illumination patterns of the plurality of illumination patterns may be formed by activating (i.e., emitting light from) one or more of the plurality of light sources. Hence, each illumination pattern may be formed by simultaneously illuminating the training sample from one or more directions of the plurality of directions. Each illumination pattern of the plurality of illumination patterns may be formed by simultaneously illuminating the training sample from one or more directions corresponding to non-overlapping portions of a Fourier space associated with the training sample. At least two illumination directions of two different illumination patterns may correspond to overlapping portions of the Fourier space associated with the training sample. A possible associated advantage is that the different illumination patterns may be formed without having to physically move any parts of a device used to capture the images of the training sample, and/or to move the training sample itself.

At least one direction of the plurality of directions may correspond to an angle larger than a numerical aperture of a microscope objective used to acquire the training set of images.

The numerical aperture of a microscope objective may be a dimensionless number associated with a range of angles over which the microscope objective accepts light. Hence, a direction larger than the numerical aperture of a microscope objective may be understood as a direction corresponding to an angle larger than the range of angles over which the microscope objective accepts light.

By illuminating the training sample from a direction corresponding to an angle larger than the numerical aperture of the microscope objective used to capture the training set of images, the image captured for that angle of illumination may comprise information about higher spatial frequencies of the training sample, and thereby finer details of the training sample, than the microscope objective normally allows (i.e., using conventional microscopy illumination). This may, in turn, allow for the microscope objective to capture phase information associated with the training sample and information relating to details of the training sample not normally being resolvable by the microscope objective, which may be used in the training of the machine learning model. Put differently, by illuminating the training sample from a direction corresponding to an angle larger than the numerical aperture of the at least one microscope objective may allow for an improved training of the machine learning model to construct a high-dynamic range image depicting a sample.

At least one light source of the plurality of light sources may be configured to emit polychromatic light.

Within the context of this disclosure, the wording "polychromatic light" should be construed as light having a spectrum comprising a relatively broad range of wavelengths. A spectrum of polychromatic light may be continuous. A spectrum of polychromatic light may be at least partly continuous. A spectrum of polychromatic light may comprise a relatively broad spectrum. A spectrum of polychromatic light may be discontinuous. A spectrum of polychromatic light may comprise a combination of a relatively broad spectrum and a relatively narrow spectrum. Examples of polychromatic light may be white light, quasi-white light, and/or pseudo-white light. White light, quasi-white light, and/or pseudo-white light may, e.g., resemble sunlight. The spectrum of white light may comprise a majority of the visible light spectrum, as opposed to light having a narrow spectrum (e.g., monochromatic light or quasi-monochromatic light). Polychromatic light may have a spectral width of 100 nm or more. Polychromatic light may have a spectral width of 400 nm or less. Narrow-spectrum light may have a spectral width of 50 nm or less. For instance, narrow-spectrum light may have a spectral width of less than 20 nm. Here, "spectral width" may be a range of wavelengths of the light emitted by the one or more light sources. For instance, spectral width may be a range of a majority (or all) wavelengths of light emitted by the one or more light sources. The spectral width may be a full width at half maximum (FWHM) or any other suitable measure used within the art.

An associated advantage is that polychromatic light may allow for more information about the training sample to be captured in the training set of images, which otherwise would be missed in parts of the spectrum not covered when using light sources configured to emit narrow-spectrum light. In turn, that information may be used by the trained machine learning model when constructing a high-dynamic range image depicting a sample which to an even higher degree may resemble the sample. For example, using polychromatic light when acquiring the training set of images, the trained machine learning model may be able to construct a high-dynamic range image depicting a sample in color. Light having a spectral width of approximately 50 nm or lower (e.g., 20 nm or lower) may typically be required in imaging applications utilizing Fourier ptychography, and sequentially and/or separately illuminating the sample with several different colors of narrow-spectrum light (e.g., monochromatic light or quasi-monochromatic light) may therefore be needed in prior art systems to capture multispectral information about the sample. Thus, using polychromatic light may reduce a total number of images needed to capture multispectral information about the training sample compared to prior art systems utilizing Fourier ptychography. Further, using different colors of monochromatic or quasi-monochromatic light may only allow information about the training sample for those specific wavelength ranges to be captured, and since polychromatic light may have a broader spectrum, using polychromatic light may allow for capturing information about the sample for a broader wavelength range compared to prior art system using monochromatic or quasi-monochromatic light.

Above, advantages and/or advantageous effects have been discussed with reference to the training sample. However, it is to be understood that these advantages and/or effects may be applicable when images of samples are used to construct high-dynamic range images depicting the samples using a machine learning model trained according to the first aspect.

According to a second aspect, a method for constructing a high-dynamic range image depicting a sample is provided. The method of the second aspect comprises: acquiring an input set of images by: illuminating, using an illumination system, the sample with a plurality of illumination patterns, and capturing, using an image-capture arrangement, an image of the sample for each illumination pattern of the plurality of illumination patterns; and constructing the high-dynamic range image depicting the sample by: inputting the input set of images into a machine learning model being trained according to the method of the first aspect, and receiving, from the machine learning model, an output comprising the constructed high-dynamic range image depicting the sample.

The plurality of illumination patterns used to acquire the input set of images may be formed in the same manner as the plurality of illumination patterns used to acquire the training set of images used to train the machine learning model. For example, the illumination patterns may have the same directions, same LED positions, same intensities, colors, etc. In other words, the input set of the second aspect may be acquired in substantially the same manner as the training set of images of the first aspect.

By inputting the input set of images into a machine learning model trained according to the method of the first aspect, the process of producing a high-dynamic range image depicting the sample may be more efficient, since a high-dynamic range image depicting the sample can be output from the trained machine learning model using images of the sample having smaller dynamic ranges compared to the constructed high-dynamic range image.

The illumination system may comprise a plurality of light sources. Each light source of the plurality of light sources may be configured to illuminate the sample from one direction of a plurality of directions. Each illumination pattern of the plurality of illumination patterns may be formed by one or more light sources of the plurality of light sources.

At least one direction of the plurality of directions may correspond to an angle larger than a numerical aperture of a microscope objective used to acquire the input set of images.

At least one light source of the illumination system may be configured to emit polychromatic light.

The above-mentioned features of the first aspect, when applicable, apply to this second aspect as well. In order to avoid undue repetition, reference is made to the above.

According to a third aspect, a device for training a machine learning model to construct a high-dynamic range image depicting a sample is provided. The device comprises: circuitry configured to execute: a first receiving function configured to receive a training set of images, wherein the training set of images is acquired by: illuminating, using an illumination system, a training sample with a plurality of illumination patterns, and capturing an image of the training sample for each illumination pattern of the plurality of illumination patterns; a second receiving function configured to receive a ground truth comprising a high-dynamic range image depicting the training sample, wherein the high-dynamic range image has a dynamic range higher than a dynamic range of an image of the training set of images; and a training function configured to train the machine learning model to construct the high-dynamic range image depicting a sample using the training set of images and the ground truth.

The above-mentioned features of the first and/or second aspects, when applicable, apply to this third aspect as well. In order to avoid undue repetition, reference is made to the above.

According to a fourth aspect, a microscope system is provided. The microscope system comprising: an illumination system configured to illuminate a sample with a plurality of illumination patterns; an image-capture arrangement configured to capture images of the sample; a microscope objective configured to image the sample onto the image-capture arrangement; and circuitry configured to execute: an acquisition function configured to acquire an input set of images by being configured to: control the illumination system to illuminate the sample with each illumination pattern of the plurality of illumination patterns, and control the image-capture arrangement to capture an image for each illumination pattern of the plurality of illumination patterns; and wherein the circuitry is further configured to execute: a high-dynamic range image construction function configured to: input the input set of images into a machine learning model being trained according to the method of the first aspect, and receive, from the machine learning model, an output comprising the constructed high-dynamic range image depicting the sample.

The illumination system may comprise a plurality of light sources. Each light source of the plurality of light sources may be configured to illuminate the sample from one direction of a plurality of directions. Each illumination pattern of the plurality of illumination patterns may be formed by one or more light sources of the plurality of light sources.

At least one direction of the plurality of directions may correspond to an angle larger than a numerical aperture of the microscope objective used to image the sample.

The above-mentioned features of the first, second, and/or third aspects, when applicable, apply to this fourth aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1A illustrates schematic of a microscope system suitable to acquire a training set of digital images for training a machine learning model and/or an input set of digital images for constructing a digital image depicting a sample using a trained machine learning model.
Figure 1B illustrates a schematic of a second microscope objective and a further illumination system that may be used for acquiring a high-dynamic range image of a ground truth.
Figure 2 illustrates a schematic of a device for training a machine learning model to construct a high-dynamic range image depicting a sample.
Figure 3A is a block scheme of a method for training a machine learning model to construct a high-dynamic range image depicting a sample.
Figure 3B is a block scheme of method steps for acquiring training sets of images for training the machine learning model.
Figure 3C is a block scheme of optional method steps for acquiring a high-dynamic range image of the ground truth for training the machine learning model.
Figure 3D is a block scheme of additional, optional method steps for acquiring training sets of images for training the machine learning model.
Figure 3E is a block scheme of optional method steps for setting an image-capture arrangement to a plurality of exposure settings.
Figure 3F is a block scheme of optional method steps for setting an image-capture arrangement to a plurality of exposure settings.
Figure 4A is a block scheme of a method for constructing a high-dynamic range image depicting a sample.
Figure 4B is a block scheme of method steps for acquiring an input set of images for constructing a high-dynamic range image depicting a sample
Figure 4C is a block scheme of method steps for constructing a high-dynamic range image depicting a sample.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

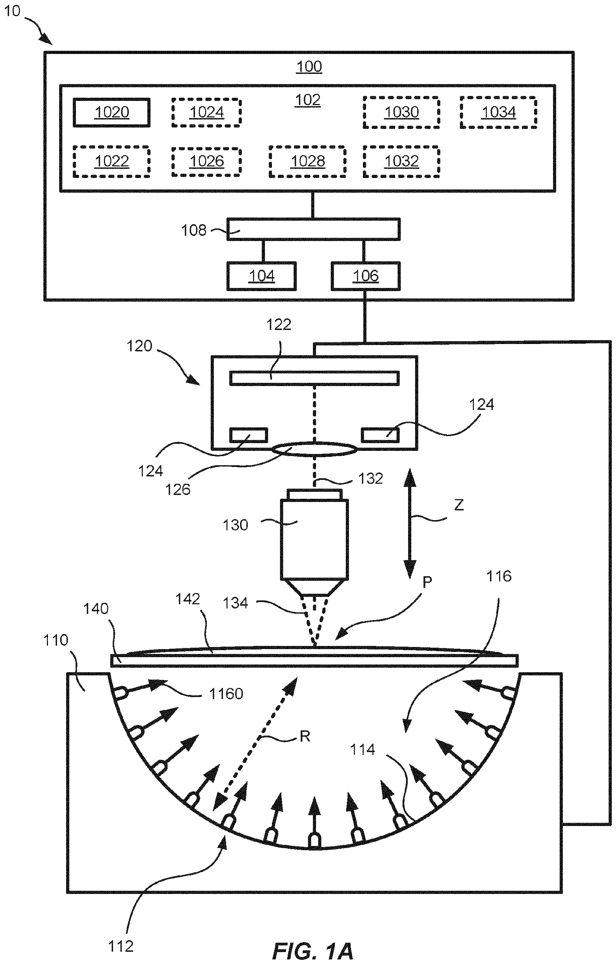

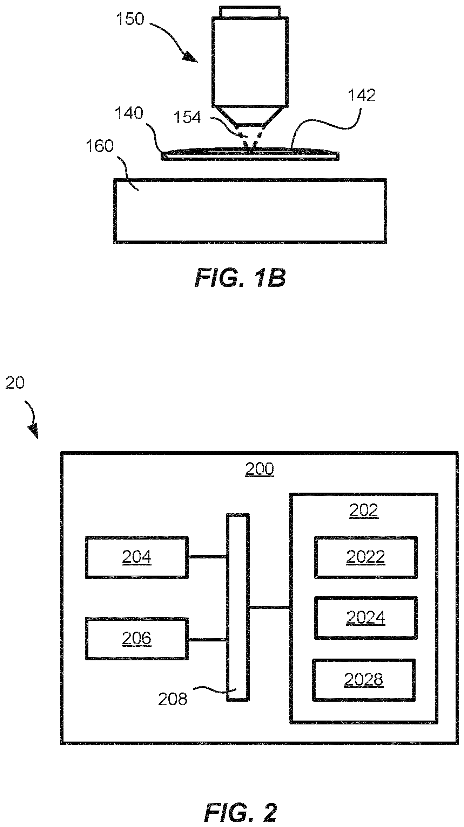

A microscope system 10 suitable for acquiring a set of images which may be used as a training set of images when training a machine learning model to construct a high-dynamic range image depicting a sample and/or as an input set of images when using a trained machine learning model to construct a high-dynamic range image depicting a sample will now be described with reference to Fig. 1A and Fig. 1B.

Figure 1A is a schematic illustration of a microscope system 10. As is seen in Fig. 1A, the microscope system 10 comprises an illumination system 110, an image-capture arrangement 120, a microscope objective 130, and circuitry 100. The microscope system 10 may further comprise a sample positioning assembly 140. The sample positioning assembly 140 may be configured to hold a sample 142. The sample 142 may be a biological sample. The sample 142 may be a cytological sample. Examples of biological samples comprise, but are not excluded to, blood, plasma, bone marrow fluid, etc. The sample 142 may be a non-biological sample. The non-biological sample may be a manmade sample or a naturally occurring sample.
Examples of non-biological samples comprise, but are not excluded to, integrated circuits, optical components, microstructures, minerals, metals, etc. The sample positioning assembly 140 may be configured to move the sample 142. The sample positioning assembly 140 may be configured to move the sample 142 along a plane. A normal of that plane may be substantially parallel to an optical axis 132 of the microscope objective 130. It is further to be understood that the sample positioning assembly 140 may be configured to move the sample 142 in a direction substantially parallel to the optical axis 132 of the microscope objective 130. Put differently, the sample positioning assembly 140 may be configured to move the sample 142 in a focusing direction of the microscope objective 130. The circuitry 100 may be configured to control the sample positioning assembly 140. For instance, the circuitry 100 may be configured to execute a sample positioning function 1032. The sample positioning function 1032 may be configured to control the position of the sample 142 using the sample positioning assembly 140.

Even though the circuitry 100 is illustrated as a separate entity in Fig. 1A, it is to be understood that the circuitry 100 may form part of an electronic device. The electronic device may, e.g., be a computer, a server, a smartphone, etc. The electronic device may be a local electronic device (i.e., arranged in proximity of the other parts of the microscope system 10) or a remote electronic device. Non-limiting examples of a remote electronic device may be a server, a cloud server, a remote computer, a remote smartphone, etc. It is further to be understood that the functionality of the circuitry 100 may be distributed over more than one electronic device. The electronic device may comprise further components, for example input devices (mouse, keyboard, touchscreen, etc.) and/or a display. As is illustrated in Fig. 1A, the circuitry 100 may comprise one or more of a memory 102, a processing unit 104, a communication interface 106, and a data bus 140. The memory 102, the processing unit 104, and the communication interface 106 may communicate (e.g., exchange data) via the data bus 140. The processing unit 104 may comprise a central processing unit (CPU) and/or a graphical processing unit (GPU). The communication interface 106 may be configured to communicate with external devices. For example, the communication interface 106 may be configured to communicate with servers, computers, external peripherals (e.g., external storage), etc. The external devices may be local devices or remote devices (e.g., a cloud server). The communication interface 106 may be configured to communicate with the external devices via an external network (e.g., a local-area network, the internet, etc.). The communication interface 106 may comprise a transceiver. The communication interface 106 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 102 may be a non-transitory computer-readable storage medium. The memory 102 may be a random-access memory. The memory 102 may be a non-volatile memory. As is illustrated in the example of Fig. 1A, the memory 102 may store program code portions 1020, 1022, 1024, 1026, 1028, 1030, 1032, 1034 corresponding to one or more functions. The program code portions 1020, 1022, 1024, 1026, 1028, 1030, 1032, 1034 may be executable by the processing unit 104, which thereby performs the functions. Hence, when it is referred to that the circuitry 100 is configured to execute a specific function, the processing unit 104 may execute program code portions 1020, 1022, 1024, 1026, 1028, 1030, 1032, 1034 corresponding to the specific function which may be stored on the memory 102. However, it is to be understood that one or more functions of the circuitry 100 may be hardware implemented and/or implemented in a specific integrated circuit. For example, one or more functions may be implemented using field-programmable gate arrays (FPGAs). Hence, one or more functions of the circuitry 100 may be implemented in hardware or software, or as a combination of the two.

The illumination system 110 is configured to illuminate the sample 142 with a plurality of illumination patterns. To that end, the illumination system 110 may comprise a plurality of light sources 112. Each light source of the plurality of light sources 112 may be configured to illuminate the sample 142 from one direction of a plurality of directions 116. The plurality of light sources 112 may comprise one or more adjustable light sources. For instance, a color and/or an intensity of light emitted by the one or more adjustable light sources may be adjustable. Thus, the circuitry 100 may be configured to adjust the one or more adjustable light sources. The plurality of light sources 112 may, as is illustrated in the example of Fig. 1A, be arranged on a curved surface 114. As illustrated in the example of Fig. 1A, the curved surface 114 may be concave along at least one direction along the surface. For example, the curved surface 114 may be a cylindrical surface. The curved surface 114 may be concave along two perpendicular directions along the surface. For example, the curved surface 114 may have a shape similar to a segment of a sphere. A segment of a sphere may be a spherical cap or a spherical dome. Arranging the plurality of light sources 112 on a curved surface 114 may be advantageous in that a distance R from each light source to a current imaging position P of the microscope objective 130 may be similar. Since this distance R is similar, an intensity of light emitted from each light source of the plurality of light sources 112 may be similar at the current imaging position P. This may be understood as an effect of the inverse square law. Thus, the sample 142 may be illuminated by light having similar intensities for each direction of the plurality of directions 116, which may, in turn, allow for a more similar illumination of the sample 142 independent of illumination direction. The distance R from each light source to the current imaging position P may be in a range from 4 cm to 15 cm. It may be advantageous to configure the illumination system 110 such that the distance R from each light source to the current imaging position P is large enough such that each light source may be treated as a point source. Hence, the distance R from each light source to the current imaging position P may be larger than 15 cm, given that an intensity of light from each light source at the current imaging position P is high enough to produce the set of images. However, it is to be understood that the plurality of light sources 112 may be arranged on a flat surface or on a surface having an irregular shape. It is further to be understood that Fig. 1A illustrates a cross section of the microscope system 10, and in particular the illumination system 110. Hence, the curved surface 114 of the illumination system 110 illustrated in Fig. 1A may be a cylindrical surface or a portion of a spherical surface (or of a quasi-spherical surface). The curved surface 114 of the illumination system 110 may be bowl shaped. The curved surface 114 may be formed of facets (not shown). Put differently, the curved surface 114 may be formed of a plurality of flat surfaces. Thus, the curved surface 114 may be piecewise flat. The curved surface 114 may be a portion of a quasi-spherical surface comprising a plurality of facets or segments. Hence, the curved surface 114 may be a portion of a surface of a polyhedron. An example of such polyhedron may be a truncated icosahedron. The plurality of light sources 112 may be arranged on the facets. Each light source may be arranged such that the light source is configured to emit light in a direction substantially parallel to a normal of the associated facet. Each facet may be a flat surface having at least three sides. For instance, the curved surface 114 may be formed of facets having five sides and facets having six sides (e.g., similar to an inner surface of a football or soccer ball). It is to be understood that each facet may be separate entities. Hence, the curved surface 114 may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets.

At least one light source of the plurality of light sources 112 may be configured to emit polychromatic light. An illumination pattern of the plurality of illumination patterns may be formed by illuminating the sample 142 with polychromatic light. At least one light sources of the plurality of light sources 112 may be configured to emit narrow-spectrum light (e.g., monochromatic or quasi-monochromatic light). An illumination pattern of the plurality of illumination patterns may be formed by illuminating the sample 142 with narrow-spectrum light. An illumination pattern of the plurality of illumination patterns may be formed by illuminating the sample 142 with polychromatic light and narrow-spectrum light. A light source of the plurality of light sources 112 may comprise one or more light emitters. A light source of the plurality of light sources 112 may comprise one or more light emitters. A light emitter may be a light-emitting diode (LED). For instance, a light source of the plurality of light sources 112 may comprise one or more LEDs. The light emitters may be configured to emit polychromatic light and/or narrow-spectrum light (e.g., monochromatic or quasi-monochromatic light). Polychromatic light may be produced by simultaneously (or at least partly simultaneously) emitting light from two or more light emitters each configured to emit narrow-band light (e.g., light of different colors, monochromatic, and/or quasi-monochromatic light). Put differently, a light source of the plurality of light sources 112 may comprise two or more light emitters, wherein a first light emitter of the two or more light emitters may be configured to emit light having a first spectrum and a second light emitter of the two or more light emitters may be configured to emit light having a second spectrum different from the first spectrum, whereby a spectrum of the polychromatic light may comprise the first spectrum and the second spectrum. The first spectrum and the second spectrum may be partially overlapping. The first spectrum and the second spectrum may be non-overlapping. The spectrum of the polychromatic light may be continuous or discontinuous. It is to be understood that a light source may comprise a plurality of light emitters. Each light emitter of the plurality of light emitters may be configured to emit light having a respective spectrum. The spectra of light emitted by the plurality of light emitters may be partially overlapping and/or non-overlapping. Polychromatic light may be emitted from an LED configured to emit white light. An LED configured to emit white light may be referred to as a white LED. A white LED may be formed by, e.g., a blue LED covered in a layer of fluorescent material which when illuminated emits white light. By using polychromatic light, the set of images may comprise information of the sample 142 associated with a relatively broad range of wavelengths, especially in comparison when using narrow-spectrum light (e.g., lasers, single-color LEDs, etc.). This may, in turn, allow the machine learning model to use more information about the sample 142 during training and/or when constructing a high-dynamic range image depicting the sample 142. Narrow-spectrum light may be emitted by an LED. The LEDs may be any type of LED, such as ordinary LED bulbs (i.e. traditional and inorganic LEDs), graphene LEDs, or LEDs typically found in displays (e.g. quantum dot LEDs (QLEDs) or organic LEDs (OLEDs)). However, other types of LEDs may be used as well.

At least one direction of the plurality of directions 116 may correspond to an angle larger than the numerical aperture of the microscope objective 130. Put differently, at least one direction of the plurality of directions 116 may correspond to an angle larger than a numerical aperture of the microscope objective 130 used to acquire the set of images. The numerical aperture of the microscope objective 130 may be a dimensionless number associated with a range of angles over which the microscope objective 130 accepts light. Hence, a direction corresponding to an angle larger than the numerical aperture of the microscope objective (e.g., direction 1160 in Fig. 1A) may be a direction corresponding to an angle outside of (e.g., larger than) the range of angles over which the microscope objective 130 accepts light. Generally in Fourier ptychography, high spatial frequencies in Fourier space associated with a sample may be sampled when that sample is illuminated from a direction corresponding to a large angle of incidence. Hence, in case the sample 142 is illuminated from a direction corresponding to an angle larger than the numerical aperture of the microscope objective 130, even higher spatial frequencies of the Fourier space associated with the sample 142 may be sampled. This is possible since light is scattered by the sample 142, and a portion of the light scattered by the sample 142 may be collected by the microscope objective 130.

Each illumination pattern of the plurality of illumination patterns may be formed by one or more light sources of the plurality of light sources 112. The illumination patterns of the plurality of illumination patterns may be formed by activating (i.e., emitting light from) one or more light sources of the plurality of light sources 112. Hence, an illumination pattern may be formed by simultaneously illuminating the sample 142 from one or more directions of the plurality of directions 116. An illumination pattern of the plurality of illumination patterns may be formed by simultaneously illuminating the sample 142 from one or more directions corresponding to non-overlapping portions of a Fourier space associated with the sample 142. An illumination pattern of the plurality of illumination patterns may be formed by illuminating the sample 142 from more than one direction of the plurality of directions 116 at a time (e.g., from a subset of the plurality of directions 116). The subset of the plurality of directions 116 may comprise directions corresponding to non-overlapping portions of the Fourier space of the sample 142. However, two or more directions of the plurality of directions 116 may correspond to overlapping portions of a Fourier space associated with the sample. For instance, two neighboring light sources of the plurality of light sources 112 may be configured to emit light in directions corresponding to overlapping portions of the Fourier space associated with the sample 142. Thus, at least two illumination directions of two different illumination patterns may correspond to overlapping portions of the Fourier space associated with the sample 142.

The image-capture arrangement 120 is configured to capture images of the sample 142. The image-capture arrangement 120 may comprise at least one image sensor 122 and/or a shutter 124. The at least one image sensor 122 may comprise a charge-coupled device (CCD) sensor and/or a complementary metal-oxide-semiconductor (CMOS) sensor. Images captured by the at least one image sensor 122 may be digital images. The at least one image sensor 122 may be capable of capturing color images. To that end, the at least one image sensor 122 may comprise a color filter (e.g., a Bayer filter) to allow the at least one image sensor 122 to capture color information of light impinging on the at least one image sensor 122. The at least one image sensor 122 may be capable of capturing grayscale images, and, in such case, the at least one image sensor 122 may not comprise a color filter. However, it is to be understood that the at least one image sensor 122 may be capable of capturing grayscale images while still comprising a color filter. As is illustrated in the example of Fig. 1A, the at least one image sensor 122 may communicate with the circuitry 100 via the communication interface 106. However, it is to be understood that the at least one image sensor 122 may communicate with the circuitry 100 via the data bus 108. The shutter 124 may be configured to control a duration of light exposure of the at least one image sensor 122. The shutter 124 may comprise a mechanical shutter. In an open state, which is illustrated in Fig. 1A, the mechanical shutter may be configured to allow light to reach the at least one image sensor 122 of the image-capture arrangement 120. In a closed state, the mechanical shutter may be configured to physically block light from reaching the at least one image sensor 122 of the image-capture arrangement 120. The shutter 124 may comprise an electronic shutter. Thus, the shutter 124 may form part of the at least one image sensor 122 (i.e., as an electronic shutter). In an open state, the electronic shutter may be configured to control the at least one image sensor 122 to register light incident on the at least one image sensor 122. In a closed state, the electronic shutter may be configured to control the at least one image sensor 122 to not register light incident on the at least one image sensor 122. An electronic shutter may offer high speed and less distortion compared to a mechanical shutter.

The microscope objective 130 is configured to image the sample 142 onto the image-capture arrangement 120. The microscope objective 130 may be configured to image the sample 142 onto the at least one image sensor 122 of the image-capture arrangement 120. For example, the microscope objective 130 may be positioned such that an object plane of the microscope objective 130 coincides with the sample 142 and an image plane of the microscope objective 130 coincides with the at least one image sensor 122. It is to be understood that whether an image depicting the sample 142 is formed on the at least one image sensor 122 may depend on the illumination of the sample 142. For instance, in case the sample 142 is illuminated with conventional microscope illumination (e.g., bright-field illumination), an image resembling the sample 142 may be formed on the at least one image sensor 122. However, in case the sample 142 is illuminated with light from only a few directions, or even a single direction, the image forming on the at least one image sensor 122 may not resemble the sample 142. For instance, the sample 142 may be illuminated with light from one or more directions corresponding to angles larger than a numerical aperture of the microscope objective 130. In such case, the image formed on the at least one image sensor 122 may not resemble the sample 142. However, even though the images may not resemble (or depict) the sample 142, those images may comprise information associated with the sample 142 and that information may be used when training the machine learning model and/or when using a trained machine learning model to construct the high-dynamic range image depicting a sample.

The microscope objective 130 may be movable along a direction Z substantially parallel to the optical axis 132 of the microscope objective 130. Put differently, the microscope objective 130 may be movable in a focusing direction. The microscope objective 130 may be movable along the direction Z by being coupled to a manual and/or motorized stage (not illustrated). The microscope objective 130 and/or the sample positioning assembly may be movable such that a focused image of the sample 142 may be captured by the at least one image sensor 122. A position of the microscope objective 130 along the direction Z may be controlled by the circuitry 100. For example, the circuitry 100 may be configured to execute a focus function 1034 configured to adjust a position of the microscope objective 130 along the direction Z. The focus function 1034 may be configured to automatically adjust the position of the microscope objective 130 along the direction Z. Put differently, the focus function 1034 may be an autofocus function. The focus function 1034 may, as in the example of Fig. 1A, control the position of the microscope objective 130 along the direction Z by communicating via the communication interface 106. However, it is to be understood that the focus function 1034 may be configured to control that position by communicating via the data bus 108.

Even though not illustrated in the example of Fig. 1A, it is to be understood that the image-capture arrangement 120 may comprise further components, e.g., one or more of an aperture, a lens, a window, color filters, etc. For instance, the image-capture arrangement 120 may, as is illustrated in Fig. 1A, further comprise a relay lens 126. The relay lens 126 may be aligned with the microscope objective 130.

The functions which the circuitry 100 is configured to execute depends on whether the set of images is to be used when training the machine learning model (i.e., as a training set of images) or when using the trained machine learning model to construct a high-dynamic range image depicting a sample (i.e. as an input set of images to a trained machined learning model). However, for both of these purposes, the circuitry 100 is configured to execute an acquisition function 1020.

The acquisition function 1020 is configured to acquire a set of images. To that end, the acquisition function 1020 is configured to control the illumination system 110 to illuminate the sample 142 with each illumination pattern of the plurality of illumination patterns, and to control the image-capture arrangement 120 to capture an image for each illumination pattern of the plurality of illumination patterns. Each image of the set of images may be associated with an illumination pattern of the plurality of illumination patterns. Each illumination pattern of the plurality of illumination patterns may, e.g., be formed by simultaneously illuminating the sample 142 from one or more directions of the plurality of directions 116, and/or by varying a number of light sources of plurality of light sources 112 of the illumination system 110 that emit light. The acquisition function 1020 may be configured to control and/or adjust one or more light sources of the plurality of light sources 112. Each illumination pattern of the plurality of illumination patterns may be formed by illuminating the sample 142 from one or more directions corresponding to non-overlapping portions of the Fourier space associated with the sample 142.

The acquisition function 1020 may be configured to control the illumination system 110 such that each illumination pattern is formed by illuminating the sample 142 from one or more directions corresponding to non-overlapping portions of the Fourier space associated with the sample 142. For instance, each illumination pattern of the plurality of illumination patterns may be formed by illuminating the sample 142 from only one direction of the plurality of directions 116. Each illumination pattern of the plurality of illumination patterns may be formed by one or more light sources of the plurality of light sources 112. Put differently, each illumination pattern of the plurality of illumination patterns may be formed by simultaneously emitting light from one or more light sources of the plurality of light sources 112. However, two different illumination patterns of the plurality of illumination patterns may be formed by illuminating the sample 142 from one or more directions corresponding to, at least partly, overlapping portions of the Fourier space associated with the sample 142. For example, a first illumination pattern may be formed by illuminating the sample 142 from a first set of directions corresponding to non-overlapping portions of the Fourier space associated with the sample 142, and a second illumination pattern may be formed by illuminating the sample 142 from a second set of directions corresponding to non-overlapping portions of the Fourier space associated with the sample 142. A direction of the first set of directions and a direction of the second set of directions may correspond to overlapping portions of the Fourier space associated with the sample 142. By comprising a plurality of light sources 112, the illumination system 110 may be able to switch between different illumination patterns quicker and/or more reliably compared to an illumination system comprising a movable light source capable of illuminating a position from different directions. The sample 142 may be illuminated under different illumination conditions (i.e., by using different illumination patterns), and more information (e.g., information associated with a refractive index, phase, and/or finer details) of the sample 142 may be collected by capturing images of the sample 142 when it is illuminated under the different illumination conditions.

The acquisition function 1020 may be further configured to set the image-capture arrangement 120 to a plurality of exposure settings. At least two exposure settings of the plurality of exposure settings may be different. For instance, the at least two exposure settings may be different exposure times and/or gain settings. The acquisition function 1020 may be further configured to set the image-capture arrangement 120 to a plurality of exposure settings for at least one illumination pattern of the plurality of illumination patterns. The acquisition function 1020 may be configured to set the image-capture arrangement 120 to a plurality of exposure settings for each illumination pattern of the plurality of illumination patterns. The acquisition function 1020 may be further configured to capture, for each exposure setting of the plurality of exposure settings, an image of the sample 142. The exposure setting may be one or more of an exposure time and a gain setting. The gain setting may be analogue gain setting of the at least one image sensor 122 of the image-capture arrangement 120. Put differently, the acquisition function 1020 may be configured to set a gain setting of the at least one image sensor 122 of the image-capture arrangement 120. The exposure time may be set by setting a shutter time of the image-capture arrangement 120. Put differently, the acquisition function 1020 may be configured to set a shutter time of the image-capture arrangement 120. For instance, the acquisition function 1020 may be configured to set a shutter time of the shutter 124 of the image-capture arrangement 120. The shutter time may be a time period during which the image-capture arrangement 120 collects light for forming an image using the at least one image sensor 122.

The acquisition function 1020 may be configured to set the image-capture arrangement 120 to a plurality of exposure settings by setting a first set of pixels of the at least one image sensor 122 to a first exposure setting, and setting a second set of pixels of the at least one image sensor 122 to a second exposure setting different from the first exposure setting. The first set of pixels and the second set of pixels may be pixels of one image sensor. In such case, two neighboring pixels of the one image sensor may be set to different exposure settings. For instance, the first and second exposure settings may be different exposure times and/or different gains. The first set of pixels and the second set of pixels may be pixels of more than one image sensors (not illustrated). For instance, the first set of pixels may be pixels of a first image sensor of the at least one image sensors 122, and the second set of pixels may be pixels of a second image sensor of the at least one image sensors 122. In case the image-capture arrangement 120 comprises more than one image sensor, the image-capture arrangement 120 may comprise additional optical components (e.g., beamsplitters, mirrors, lenses, etc.) configured such that the sample 142 is imaged onto the first image sensor and the second image sensor. The additional optical components may be configured such that the sample 142 is imaged onto the first image sensor and the second image simultaneously. In such case, the additional optical components may comprise a beamsplitter. Alternatively, the additional optical components may be configured such that the sample 142 is imaged onto the first image sensor and the second image sequentially or alternatingly. In such case, the additional optical components may comprise a mirror. The mirror may be arrangeable in at least two positions. In a first of the two positions, the mirror may be arranged such that the sample 142 is imaged onto the first image sensor. In a second of the two positions, the mirror may be arranged such that the sample 142 is imaged onto the second image sensor. The acquisition function 1020 may be further configured to control which position the mirror is arranged at. The acquisition function 1020 may be configured to set the image-capture arrangement 120 to a plurality of exposure settings by setting the shutter 124 to a plurality of exposure times.

The acquired set of images may be used as a training set of images when training a machine learning model to construct a high-dynamic range image depicting a sample. In this context, the sample 142 may be referred to as a training sample 142. Thus, the circuitry 100 may be configured to execute a first receiving function 1022 configured to receive a training set of images. For instance, the first receiving function 1022 may be configured to receive the training set of images from the at least one image sensor 122 of the image-capture arrangement 120. It is to be understood that the set of images may not be acquired in direct connection with the training process. Instead, the images may be acquired and stored on a storage medium from which the circuitry 100 may be configured to retrieve the set of images to be used for training. Thus, the first receiving function 1022 may be configured to receive the training set of images from a storage medium. In the training process, the circuitry 100 may be further configured to execute a second receiving function 1024 configured to receive a ground truth. The ground truth comprises a high-dynamic range image depicting the sample 142. The high-dynamic range image has a dynamic range higher than a dynamic range of an image of the training set of images. The high-dynamic range image may be acquired using a microscope system similar to (or even the same as) the microscope system illustrated in Fig. 1A. In that case, the circuitry 100 may be configured to execute a further acquisition function 1026. The further acquisition function 1026 may be configured to set the image-capture arrangement to a plurality of exposure settings. The further acquisition function 1026 may be configured to set the exposure setting of the image-capture arrangement 120 similar to the acquisition function 1020 described above. To avoid undue repetition, reference is made to the above description of the acquisition function 1020. The further acquisition function 1026 may be further configured to control the image-capture system 120 to capture, for each exposure setting of the plurality of exposure settings, an image depicting the sample 142, thereby forming a stack of images. The further acquisition function 1026 may be further configured to form the high-dynamic range image by combining the stack of images. The skilled person is aware of different techniques of combining a stack of images having different exposures into a high-dynamic range image. For instance, the process may comprise selecting and extracting shadow and/or highlight information from overexposed and/or underexposed images of an object (e.g., the sample 142) and combining them with one or more images that are exposed correctly for that object.

The high-dynamic range image of the ground truth may be acquired using a second microscope objective 150. In the following, the microscope objective 130 of Fig. 1A may be referred to as a first microscope objective 130. The second microscope objective 150 may have a higher numerical aperture 154 than the first microscope objective 130. Figure 1B is a schematic illustration of the second microscope objective 150. Even though it is not explicitly illustrated in Fig. 1B, it is to be understood that additional optics may be used together with the second microscope objective 150. As a specific example, the second microscope objective 150 may be used in combination with a relay lens (similarly to the first microscope objective and the relay lens 126 of Fig. 1A). In the example of Fig. 1B, the sample 142 and the sample positioning assembly 140 are positioned between the second microscope objective 150 and a further illumination system 160. The further illumination system 160 may, as in the example of Fig. 1B, comprise a conventional light source suitable for conventional microscopy. The further illumination system 150 may be configured to illuminate the sample 142 with conventional microscopy illumination (e.g., bright-field illumination, dark-field illumination, etc.). It is to be understood that the further illumination system 150 may be configured to illuminate a frontside of the sample 142 (i.e., the side facing the second microscope objective 150) and/or a backside of the sample 142 (i.e., the side opposite the frontside). Since the second microscope objective 150 may have a higher numerical aperture 154 than the first microscope objective 130, a resolution of the high-dynamic range image of the ground truth may be higher than a resolution of at least one image of the training set of images. The resolution of the high-dynamic range image of the ground truth may be higher than a resolution of each image of the training set of images. The numerical aperture 134 of the first microscope objective 130 may be 0.5 or lower. For instance, the numerical aperture 134 of the first microscope objective 130 may be 0.4 or 0.25. The numerical aperture of the second microscope objective 150 may be 0.75 or higher. For instance, the numerical aperture 154 of the second microscope objective 150 may be 1.25. It is to be understood that microscope immersion oil may be used when capturing the high-dynamic range image of the ground truth using the second microscope objective 150. As a non-limiting example, the training set may be captured using a numerical aperture of 0.25 (corresponding to a magnification of 10x) and the high-dynamic range image of the ground truth may be captured using a numerical aperture of 0.75 (corresponding to a magnification of 40x). As a further non-limiting example, the training set may be captured using a numerical aperture of 0.5 (corresponding to a magnification of 20x) and the high-dynamic range image of the ground truth may be captured using a numerical aperture of 1.25 (corresponding to a magnification of 100x). It is to be understood that other combinations of numerical apertures may be used when capturing the training set of images and the high-dynamic range image of the ground truth. It is to be understood that the training set of images and the high-dynamic range image of the ground truth may be acquired using the first microscope objective 130 and the illumination system 110 illustrated in Fig. 1A. In that case, a resolution of the high-dynamic range image of the ground truth may be similar to, or even the same as, a resolution of at least one image of the training set of images.

As is illustrated in Fig. 1A, the circuitry 100 may be further configured to execute a training function 1028. The training function 1028 may be configured to train the machine learning model to construct a high-dynamic range image depicting a sample using the training set of images and the ground truth. The training function 1028 may be configured to train the machine learning model to correlate the training set of images to the ground truth (e.g., the high-dynamic range image depicting the training sample 142). The training function 1028 may be configured to train the machine learning model iteratively and/or recursively until a difference between an output of the machine learning model (i.e., the constructed high-dynamic range image) and the ground truth (i.e., the high-dynamic range image depicting the training sample 142) is smaller than a predetermined threshold. A smaller difference between the output of the machine learning model and the ground truth may indicate a higher accuracy of the constructed high-dynamic range image provided by the machine learning model. Hence, preferably, the difference between the output of the machine learning model and the ground truth may be minimized. It is to be understood that the training function may be configured to train the machine learning model to construct high-dynamic range images of samples for a plurality of different sample types. In such case, the machine learning model may, for each sample type, be trained using a training set of images of a training sample of the sample type, and a corresponding ground truth associated with the respective sample type.

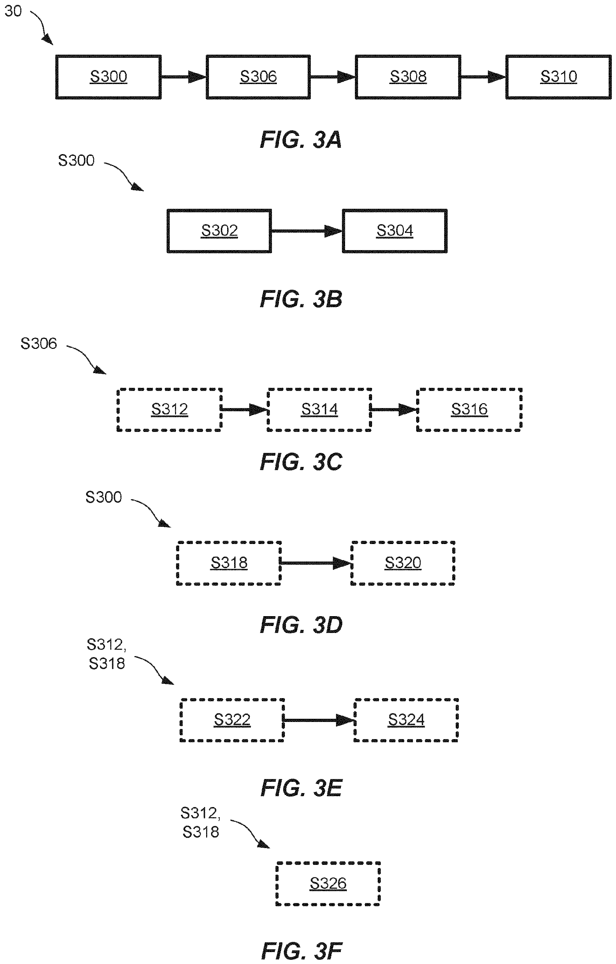

In case the acquired set of images is to be used as the input set of images for constructing a high-dynamic range image depicting the sample 142 using the trained machine learning model (e.g., trained in a manner similar to that described above and/or in connection with Fig. 2, and Fig. 3A - Fig. 3F below). In that case, the circuitry 100 may be further configured to execute a high-dynamic range image construction function 1030. The high-dynamic range image construction function 1030 is configured to input the input set of images into the trained machine learning model, and receive, from the trained machine learning model, an output comprising the constructed high-dynamic range image depicting the sample 142. The images of the input set of images may be acquired in substantially the same way as the image of the training set of images. For instance, the plurality of illumination patterns used to acquire the input set of images may be formed in substantially the same manner as the plurality of illumination patterns used to acquire the training set of images that was used to train the machine learning model. For example, the illumination patterns may use substantially the same directions, same LED positions, same intensities, colors, etc. In other words, the training set of images used to train a machine learning model may be acquired in substantially the same manner as the input set of images to that trained machine learning model.

Even though the training of the machine learning model has been described in connection with the microscope system 10 of Fig. 1A and, potentially with the additional components of Fig. 1B, it is to be understood that the training may be performed in a separate device. Figure 2 is a schematic illustration of a device 20 for training a machine learning model to construct a high-dynamic range image depicting a sample. The device 20 of Fig. 2 may be a computing device (e.g., a computer, a server, a cloud server, a smartphone, etc.). The device 20 may comprise further components, for example input devices (mouse, keyboard, touchscreen, etc.) and/or a display. The device 20 comprises circuitry 200. The circuitry 200 illustrated in Fig. 2 may be similar to the circuitry 100 described in connection with Fig. 1A. Hence, the circuitry 200 illustrated in Fig. 2 may comprise one or more of a memory 202, a processing unit 204, a communication interface 206, and a data bus 208. The description of the corresponding features of the circuitry 100 of Fig. 1A, when applicable, apply to these features of the circuitry 200 of Fig. 2. In order to avoid undue repetition, reference is made to the above. The circuitry 200 of Fig. 2 is configured to execute a first receiving function 2022, a second receiving function 2024, and a training function 2028. The first receiving function 2022 is configured to receive a training set of images. As described above, the set of images acquired using the microscope system 10 illustrated in Fig. 1A may be used as the training set of images. Hence, the first receiving function 2022 may be configured to receive the training set of images from the circuitry 100 illustrated in Fig. 1A. It is however to be understood that the first receiving function 2022 may be configured to receive the training set of images from other sources as well. For instance, the training set of images may be stored on a remote device (e.g., a server, etc.) or on a local device (e.g., a computer, on the memory, etc.), and the first receiving function 2022 may be configured to receive the training set of images therefrom. The first receiving function 2022 may receive the training set of images via the communication interface 206. As is further described above, the training set of images is acquired by illuminating, using an illumination system 110, the training sample 142 with a plurality of illumination patterns, and capturing an image of the training sample 142 for each illumination pattern of the plurality of illumination patterns. The second receiving function 2024 is configured to receive a ground truth comprising a high-dynamic range image depicting the training sample 142. The high-dynamic range image has a dynamic range higher than a dynamic range of an image of the training set of images. The high-dynamic range image of the ground truth may be acquired as described in connection with Fig. 1A and Fig. 1B. The second receiving function 2024 may be configured to receive the high-dynamic range image from a microscope system used to capture the high-dynamic range image of training sample 142. For example, in case the microscope system 10 of Fig. 1A is used to acquire the high-dynamic range image of the training sample 142, the second receiving function 2024 may be configured to receive the high-dynamic range image of the training sample 142 from the circuitry 100 illustrated in Fig. 1A. It is however to be understood that the second receiving function 2024 may be configured to receive the high-dynamic range image of the training sample 142 from other sources as well. For instance, the high-dynamic range image of the training sample 142 may be stored on a remote device (e.g., a server, etc.) or on a local device (e.g., a computer, on the memory, etc.), and the second receiving function 2024 may be configured to receive the high-dynamic range image of the training sample 142 therefrom. The second receiving function 2024 may be configured to receive the high-dynamic range image of the training sample 142 via the communication interface 206. The training function 2028 is configured to train a machine learning model to construct the high-dynamic range image depicting a sample using the training set of images and the ground truth. The training function 2028 of Fig. 2 may be configured to train the machine learning model in the same manner as the training function 1028 of Fig. 1A. In order to avoid unnecessary repetition, reference is made to the above.

Figure 3A - Fig. 3F illustrate a box scheme of a method 30 for training a machine learning model to construct a high-dynamic range image depicting a sample. The method 30 of Fig. 3A may be a computer-implemented method. The method 30 comprises acquiring S300 a training set of images. As is illustrated in Fig. 3B, the training set of images is acquired S300 by illuminating S302, using an illumination system, the training sample with a plurality of illumination patterns, and capturing S304 an image of the training sample for each illumination pattern of the plurality of illumination patterns. As is illustrated in Fig. 3A, the method 30 further comprises acquiring S306 a high-dynamic range image depicting the training sample, wherein the high-dynamic range image has a dynamic range higher than a dynamic range of an image of the training set of images; forming S308 a ground truth comprising the high-dynamic range image; and training S310 the machine learning model to construct the high-dynamic range image depicting a sample using the training set of images and the ground truth. As is illustrated in Fig. 3C, acquiring S306 the high-dynamic range image may comprise: setting S312 an image-capture arrangement configured to capture images of the training sample to a plurality of exposure settings; capturing S314, for each exposure setting of the plurality of exposure settings, an image depicting the training sample, thereby forming a stack of images; and forming S316 the high-dynamic range image by combining the stack of images. As is illustrated in Fig. 3D, acquiring S300 the training set of images for at least one illumination pattern may further comprise: setting S318 an image-capture arrangement configured to capture images of the training sample to a plurality of exposure settings; and capturing S320, for each exposure setting of the plurality of exposure settings, an image of the training sample. The image-capture arrangement may comprise at least one image sensor, and, as is illustrated in Fig. 3E, setting S312, S318 the image-capture arrangement to a plurality of exposure settings may comprise: setting S322 a first set of pixels of the at least one image sensor to a first exposure setting; and setting S324 a second set of pixels of the at least one image sensor to a second exposure setting different from the first exposure setting. The image-capture arrangement may comprise a shutter, and, as is illustrated in Fig. 3F, setting S312, S318 the image-capture arrangement to a plurality of exposure settings may comprise setting S326 the shutter to a plurality of exposure times. The training set of images may be acquired S300 using a first microscope objective and the high-dynamic range image of the ground truth may be acquired S306 using a second microscope objective, wherein the second microscope objective may have a higher numerical aperture than the first microscope objective, whereby a resolution of the high-dynamic range image may be higher than a resolution of an image of the training set of images. The illumination system may comprise a plurality of light sources, each light source of the plurality of light sources may be configured to illuminate the training sample from one direction of a plurality of directions; and wherein each illumination pattern of the plurality of illumination patterns may be formed by one or more light sources of the plurality of light sources. At least one direction of the plurality of directions may correspond to an angle larger than a numerical aperture of a microscope objective used to acquire the training set of images. At least one light source of the plurality of light sources may be configured to emit polychromatic light.

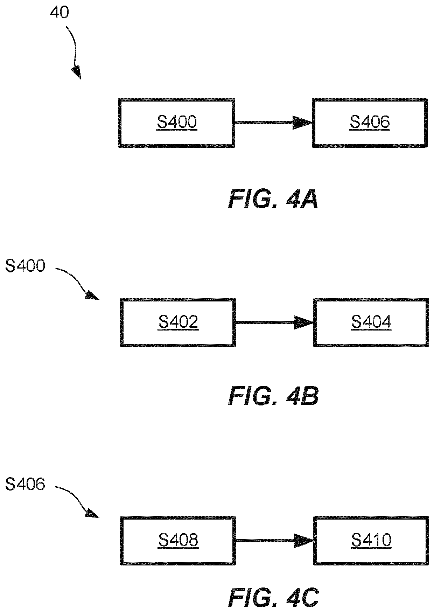

Figure 4A - Fig. 4C illustrate a box scheme of a method 40 for constructing a high-dynamic range image depicting a sample. The method 40 comprises: acquiring S400 an input set of images. As is illustrated in Fig. 4B, the input set of images is acquired S400 by: illuminating S402, using an illumination system, the sample with a plurality of illumination patterns, and capturing S404, using an image-capture arrangement, an image of the sample for each illumination pattern of the plurality of illumination patterns. As is illustrated in Fig. 4A, the method 40 further comprises constructing S406 the high-dynamic range image depicting the sample. As is illustrated in Fig. 4C, the high-dynamic range image is constructed S406 by: inputting S408 the input set of images into a machine learning model being trained according to the method 30 of Fig. 3A - Fig. 3F, and receiving S410, from the machine learning model, an output comprising the constructed high-dynamic range image depicting the sample. At least one light source of the illumination system may be configured to emit polychromatic light.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as Swin!R. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises images. The images may be digital images. An image may be represented as matrix (or as an array), and each element in the matrix (or array) may represent a corresponding pixel of the image. The value of an element may thereby represent a pixel value and/or color value of the corresponding pixel in the image. Hence, the input and output to the machine learning model may be numerical (e.g., a matrix or an array) representing images. In this context, the input is a set of images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of images and a ground truth. The training set of images is acquired in a manner similar to the acquisition of the input set of images. Put differently, the illumination patterns used when acquiring the training set of images and the input set of images may be similar or identical. The machine learning model may be trained using the training set of images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct images of a wider range of sample types and/or with higher accuracy.

The person skilled in the art realizes that the present inventive concept by no means is limited to the preferred variants described above. On the contrary, many modifications and variations are possible within the scope of the appended claims. Additionally, variations to the disclosed variants can be understood and effected by the skilled person in practicing the claimed invention, from a study of the drawings, the disclosure, and the appended claims.

## Claims

1. A method (30) for training a machine learning model to construct a high-dynamic range image depicting a sample, the method (30) comprising:
acquiring (S300) a training set of images by:
illuminating (S302), using an illumination system (110), the training sample (142) with a plurality of illumination patterns, and
capturing (S304) an image of the training sample (142) for each illumination pattern of the plurality of illumination patterns;
acquiring (S306) a high-dynamic range image depicting the training sample (142), wherein the high-dynamic range image has a dynamic range higher than a dynamic range of an image of the training set of images;
forming (S308) a ground truth comprising the high-dynamic range image; and
training (S310) the machine learning model to construct the high-dynamic range image depicting a sample using the training set of images and the ground truth.

2. The method (30) according to claim 1, wherein acquiring (S306) the high-dynamic range image comprises:
setting (S312) an image-capture arrangement (120) configured to capture images of the training sample (142) to a plurality of exposure settings;
capturing (S314), for each exposure setting of the plurality of exposure settings, an image depicting the training sample (142), thereby forming a stack of images; and
forming (S316) the high-dynamic range image by combining the stack of images.

3. The method (30) according to claim 1 or 2, wherein acquiring (S300) the training set of images for at least one illumination pattern further comprises:
setting (S318) an image-capture arrangement (120) configured to capture images of the training sample (142) to a plurality of exposure settings; and
capturing (S320), for each exposure setting of the plurality of exposure settings, an image of the training sample (142).

4. The method (30) according to claim 2 or 3, wherein the image-capture arrangement (120) comprises at least one image sensor (122), and wherein setting (S312, S318) the image-capture arrangement (120) to a plurality of exposure settings comprises:
setting (S322) a first set of pixels of the at least one image sensor (122) to a first exposure setting; and
setting (S324) a second set of pixels of the at least one image sensor (122) to a second exposure setting different from the first exposure setting.

5. The method (30) according to any one of claim 2-4, wherein the image-capture arrangement (120) comprises a shutter (124), and wherein setting (S312, S318) the image-capture arrangement (120) to a plurality of exposure settings comprises setting (S326) the shutter (124) to a plurality of exposure times.

6. The method (30) according to any one of claims 1 - 4, wherein the training set of images is acquired (S300) using a first microscope objective (130) and the high-dynamic range image of the ground truth is acquired (S306) using a second microscope objective (150), wherein the second microscope objective (150) has a higher numerical aperture (154) than the first microscope objective (130), whereby a resolution of the high-dynamic range image is higher than a resolution of an image of the training set of images.

7. The method (30) according to any of the claims 1 - 6, wherein the illumination system (110) comprises a plurality of light sources (112), each light source of the plurality of light sources (112) being configured to illuminate the training sample (142) from one direction of a plurality of directions (116); and
wherein each illumination pattern of the plurality of illumination patterns is formed by one or more light sources of the plurality of light sources.

8. The method (30) according to claim 7, wherein at least one direction of the plurality of directions (116) corresponds to an angle larger than a numerical aperture (134) of a microscope objective (130) used to acquire the training set of images.

9. The method (30) according to claim 7 or 8, wherein at least one light source of the plurality of light sources (112) is configured to emit polychromatic light.

10. A method (40) for constructing a high-dynamic range image depicting a sample, the method (40) comprising:
acquiring (S400) an input set of images by:
illuminating (S402), using an illumination system (110), the sample (142) with a plurality of illumination patterns, and
capturing (S404), using an image-capture arrangement (120), an image of the sample (142) for each illumination pattern of the plurality of illumination patterns; and
constructing (S406) the high-dynamic range image depicting the sample (142) by:
inputting (S408) the input set of images into a machine learning model being trained according to the method (30) of any one of claims 1 - 9, and
receiving (S410), from the machine learning model, an output comprising the constructed high-dynamic range image depicting the sample (142).

11. The method (40) according to claim 10, wherein at least one light source of the illumination system (110) is configured to emit polychromatic light.

12. A device (20) for training a machine learning model to construct a high-dynamic range image depicting a sample, the device (20) comprising:
circuitry (200) configured to execute:
a first receiving function (2022) configured to receive a training set of images, wherein the training set of images is acquired by:
illuminating, using an illumination system (110), a training sample (142) with a plurality of illumination patterns, and
capturing an image of the training sample (142) for each illumination pattern of the plurality of illumination patterns;
a second receiving function (2024) configured to receive a ground truth comprising a high-dynamic range image depicting the training sample (142), wherein the high-dynamic range image has a dynamic range higher than a dynamic range of an image of the training set of images; and
a training function (2028) configured to train the machine learning model to construct the high-dynamic range image depicting a sample using the training set of images and the ground truth.

13. A microscope system (10) comprising:
an illumination system (110) configured to illuminate a sample (142) with a plurality of illumination patterns;
an image-capture arrangement (120) configured to capture images of the sample (142);
a microscope objective (130) configured to image the sample (142) onto the image-capture arrangement (120); and
circuitry (100) configured to execute:
an acquisition function (1020) configured to acquire an input set of images by being configured to:
control the illumination system (110) to illuminate the sample (142) with each illumination pattern of the plurality of illumination patterns, and
control the image-capture arrangement (120) to capture an image for each illumination pattern of the plurality of
illumination patterns; and
wherein the circuitry (100) is further configured to execute:
a high-dynamic range image construction function (1030) configured to:
input the input set of images into a machine learning model being trained according to the method (30) of any one of claims 1 - 9, and
receive, from the machine learning model, an output comprising the constructed high-dynamic range image depicting the sample (142).

14. The microscope system (10) according to claim 13, wherein the illumination system (110) comprises a plurality of light sources (112), each light source of the plurality of light sources (112) being configured to illuminate the sample (142) from one direction of a plurality of directions (116), and wherein each illumination pattern of the plurality of illumination patterns is formed by one or more light sources of the plurality of light sources (112).

15. The microscope system (10) according to claim 14, wherein at least one direction of the plurality of directions (116) corresponds to an angle larger than a numerical aperture (134) of the microscope objective (130) used to image the sample (142).
